# EUROPEAN PATENT SPECIFICATION

(11) **EP 3 974 299 B1**
(45) Date of publication and mention of the grant of the patent: **27.11.2024**
(21) Application number: 20198026.5
(22) Date of filing: 24.09.2020
(51) Int. Cl.: B62H 3/00, B62H 3/02, E04H 6/00, E04H 6/14, B62K 3/00

(54) **METHOD AND APPARATUS FOR STORING SCOOTERS**
VERFAHREN UND VORRICHTUNG ZUR AUFBEWAHRUNG VON ROLLERN
PROCÉDÉ ET APPAREIL DE STOCKAGE DE SCOOTERS

(43) Date of publication of application: 30.03.2022
(73) Proprietor: BrainNova Osakeyhtiö, 00350 Helsinki (FI)
(72) Inventor: PIETOLA, Paavo, 00350 Helsinki (FI); ELORANTA, Veli, 00350 Helsinki (FI)
(74) Representative: Laine IP Oy

(56) References cited:
- CN-A- 108 708 587
- CN-A- 108 979 224
- JP-A- 2015 132 153
- JP-U- H0 173 251

## Description

### FIELD

The invention relates to storing scooters, in particular electric scooters.

### BACKGROUND

Traffic congestion and CO2 footprint containment are driving metropolies and large cities to adopt the city centers to "no-car" policies. This will push the boundaries for the logistics within the city centers, leaving people with options to either walk - or cycle. However, city centers cannot sustain huge number of bikes in their current form. There is simply no space to store them, and as has been seen, large-scale bike renting and sharing services cannot sustain. If all the city-dwellers would bike it becomes a total chaos in terms of bike storage.

Growing health concerns among consumers, in addition to surging acceptance of green transportation in an effort to reduce carbon footprint, will play a pivotal role in the growth of global bicycle market in next decade. Moreover, increasing government support encouraging adoption of bicycles and rapid development of dedicated cycling infrastructure in developed as well as developing economies will reportedly push the sales of bicycles in upcoming years. Intensifying traffic congestion issue and elevating fuel prices are foreseen to remain the key factors driving the need for cycling and raising the demand for bicycles thereby.

The need of new transportation solutions has initiated a micro-mobility trend that has been further energized with the emergence of the shared and dockless electric scooters (e-scooter for short). E-scooters are preferred for short distances due to battery limitation, comfort, and renting pricing structure. On the other hand bicycles are more affordable and preferred for longer distances.

The growing population in urban environments requires smart transport, away from cars. Already some cities are forbidding or making it very difficult (financially) for cars to enter city centres. Public transport or bicycles are encouraged instead. As sharing and rental services are currently gaining higher traction in the global bicycle and e-scooter (collectively micro-mobility) market, stakeholders are increasingly striving to adapt to this trend.

Dockless scooters are becoming an increasing problem in cities as their popularity grows. Customers using the scooters may be rather careless of where they leave the scooter after use. This causes obstructions on walkways, bicycle roads and corridors, for example. Such obstructions annoy greatly especially pedestrians, bicyclists and delivery personnel, whereby public acceptance of scooters may detoriate. This even has caused bans for rental scooters in some cities.

Docking stations would at least partly solve the problem of parking and storing rental scooters and even privately owned scooters. They would also provide charging whereby a fully charged scooter would be available. Several attempts for providing storing facilities for bicycles and/or scooters have been made and solutions are available. Currently known facilities have one general drawback. The packing density of bicycles or scooters is very low, whereby the docking or storing stations require large footprint or otherwise large space. This is a major problem in densely populated cities where availability of free space is limited.

Docking or storing stations for bicycles and/or scooters are described in WO 2017217929 and US 8437873. Other solutions are EcoCycle, Bike-Safe-Tower, bike.box and WÖHR Bikesafe, for example. Even further examples of stroring solutions can be found from CN 108 979 224, disclosing the features of the preamble of claim 1; JP 2015 132153, disclosing the features of the preamble of claim 8; CN 108 708 587 and JP H01 73251.

### SUMMARY OF THE INVENTION

The invention is defined by the features of the independent claims. Some specific embodiments are defined in the dependent claims.

According to a first aspect of the present invention, there is provided an apparatus for storing scooters, comprising a base forming a ground level, a storage conveyor having a transport direction and a set of carriers for holding the scooters, wherein the transport direction is in an angle in relation to the ground level and the carriers are configured to hold the scooters in a position wherein the steering column of the scooter is tilted from the upright position in relation to the ground level.

According to a second aspect of the present invention, there is provided a method for storing scooters, comprising gripping a scooter with a tilting gripper at a reception point on a ground level, tilting the scooter with the tilting gripper so that the steering column of the scooter is tilted from the upright position in relation to the ground level, moving the scooter with the tilting gripper to a carrier of a storage conveyor and transferring the scooter by the storage conveyor from the reception point to a delivery point, holding the scooter in a position wherein the steering column is tilted in relation to the ground level.

According to the present invention, there is provided a method wherein the scooter is received to a reception point in an upright position wherein the steering column of the scooter extends upwards from the ground level, the scooter is gripped by a tilting gripper and the scooter is turned so that the rear wheel of the scooter is lifted upwards and the scooter is gripped by the carrier of the transfer conveyor on a position wherein the rear wheel of the scooter points upwards and the steering column is below the level of the rear wheel.

According to a fourth aspect of the present invention there is provided a method wherein the scooter is received on the carrier of the transfer conveyor on a position wherein the rear wheel points upwards and the steering column is below the level of the rear wheel and the scooter is turned to a position wherein the wheel line of the scooter is transferred from vertical position towards horizontal position, preferably to a horizontal position.

According to the fifth aspect of the present invention, there is provided an apparatus wherein the transfer conveyor is vertical.

According to the sixth aspect of the present invention, there is provided an apparatus wherein the transfer conveyor is vertical and the track of the conveyor is an endless loop.

According to the seventh aspect of the invention the angle in relation to the ground level on which the scooter is tilted is between 0° to 180°, excluding the end points, and preferably between 0° to 90°, excluding the 0°.

### BRIEF DESCRIPTION OF THE DRAWINGS

FIGURE 1 illustrate an apparatus for storing scooters in accordance with at least some embodiments of the present invention;
FIGURE 2 illustrates the apparatus of FIGURE 1 partially dismantled and in first operating position;
FIGURE 3 illustrates the apparatus of FIGURE 2 in an enlarged view;
FIGURE 4 illustrates the apparatus of FIGURE 2 in a second operating position;
FIGURE 5 illustrates the apparatus of FIGURE 2 in a third operating position;
FIGURE 6 illustrates the apparatus of FIGURE 2 in a fourth operating position.

The figures above show an example apparatus capable of supporting at least some embodiments of the present invention.

### EMBODIMENTS

### DEFINITIONS

In the present context, the term "scooter" comprises vehicles having a surface for supporting a person operating the vehicle, at least one wheel at each end of the supporting surface and a steering column for operating the vehicle.

Wheel line of the scooter is a line on which the wheels of the scooter are set when the scooter is in riding position.

This invention relates to storing and docking of scooters, especially electric scooters. Rental dockless scooters cause problems in cities as they are used in abundance and users are careless in parking the vehicles. The invention provides a compact storing facility for such scooters. The storing facility provided may be combined with services that make use of the system more lucrative for the users. Especially charging of the vehicle is in demand, but services may include cleaning, up to disinfection, service check and removal of dysfunctional vehicles to repairs. In such way the users always get a fully charged and checked clean scooter for use. The scooters are stored on a transporter in a stacked manner so that they are inclined in relation to the transporter. In this way scooters may be stacked efficiently so that packing/storing density is high. In cities the high packing density is needed as space is often limited. The storing transporter is preferably positioned upright, so the footprint of the storing facility is kept small.

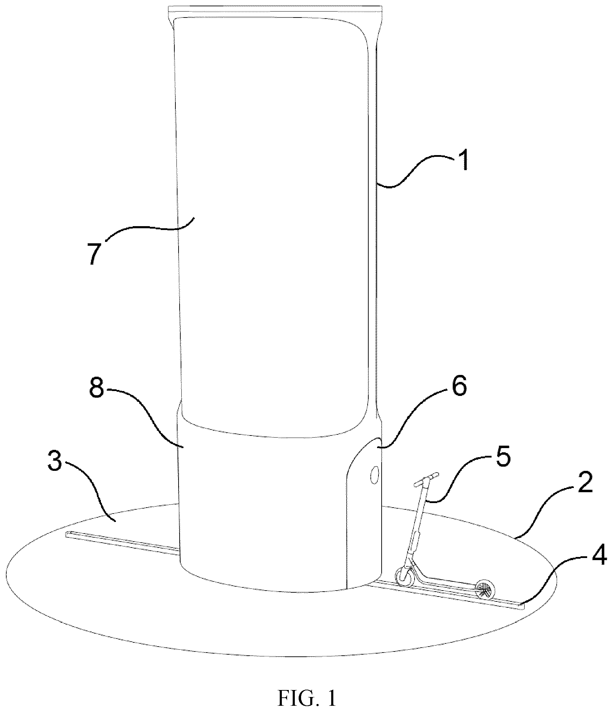

FIGURE 1 illustrates an apparatus in accordance with at least some embodiments of the present invention. FIGURE 1 shows a closed tower 1 set on a base 2. The upper surface 3 of the base 2 forms a ground level that is preferably set horizontally. The base 2 is set on a surface of a walking street, open square or any place where there is enough space for the apparatus. The upper surface 3 may be slightly inclined if the environment on which it is set requires such setting. On the upper surface 3 of the base 2 is a rail 4 that runs through the closed tower 1. The rail 4 is used for receiving and delivery of the scooters and forms the reception point of the apparatus. A scooter 5 is depicted on the rail 4. The closed tower 1 has a shell 8 and at least one door 6 for moving the scooter 5 into the closed tower 1 and out therefrom. Preferably there are two doors 6, one on each side of the closed tower 1 at the place where the rail 4 extends from the closed tower 1. The operation of the doors 6 is preferably automated and doors 6 may include several functions for facilitating the operation of the apparatus. These features are described below. The outer surface of the closed tower may include frame or a window for posters, advertisements and similar material, or one or more displays 7 for presenting information or entertainment material.

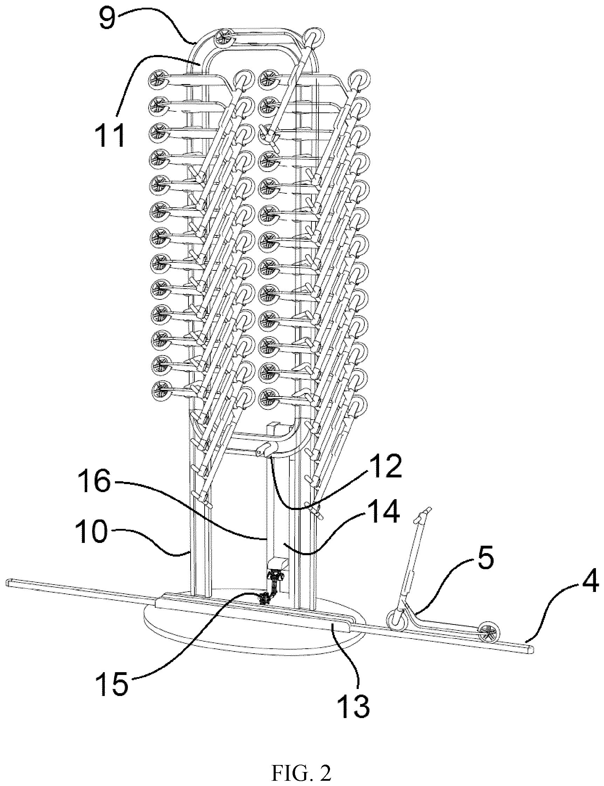

FIGURE 2 shows an example apparatus capable of supporting at least some embodiments of the invention. In this FIGURE the shell of the apparatus is removed to show functions and elements of the apparatus. The storing system of the apparatus is built in this example of an endless rail conveyor 9. The endless conveyor 9 is supported on a frame 10 that is standing on the base 2. The rail 4 for receiving and delivery of the scooters 5 runs diagonally through the upper surface 3 of the base 2 and the frame 10 is arranged on the side of the rail 4.

The endless conveyor 9 comprises a U-shaped rail 10 that is formed as an endless loop having two vertical long parts and two horizontal short parts. The long and short parts are joined by curved edges to form an endless rectangular loop with rounded edges. A set of carriers 12 is arranged to run in the slot of the U-shaped rail 10. Thus, the U-shaped rail forms the transfer path of the conveyor and defines its transfer direction. The carriers may be moved by a chain, belt or individual motors or actuators, for example. The actual setup and structure of the conveyor may vary and a person skilled in the art of designing transporters for transporting single object is able to configure a suitable conveyor. The lowest part of the endless conveyor 9 is above the upper surface 3 of the base 2 and the rail 4. The level of the lowest part of the endless conveyor 9 is set higher than the height of the steering column of a scooter 5 and the length of the scooter 5 for reasons explained below.

At the foot of the frame 10 is a transfer conveyor 13 that may be set on side or sides of the conveyor 4 or may form a part of said conveyor. The length of the transfer conveyor 13 is chosen so that it is shorter than the outer dimensions of the shell 8 so that the transfer conveyor 13 is completely inside the shell 8. The reason for this is to avoid any moving parts extending outside the shell for safety reasons.

Further, on the side of the transport conveyor 13 and the frame 10 is a tilting lift 14 having a vertical lifting rail 16 and a tilting gripper 15 set to run on said lifting rail 16. The tilting lift 14 further comprises actuators for providing the movements of the tilting gripper 15. The tilting lift described herein is a simple way to provide the movements needed herein. It can be contemplated that the example shown can be replaced with any manipulator, robot or other similar structure capable of providing the movements needed and described below.

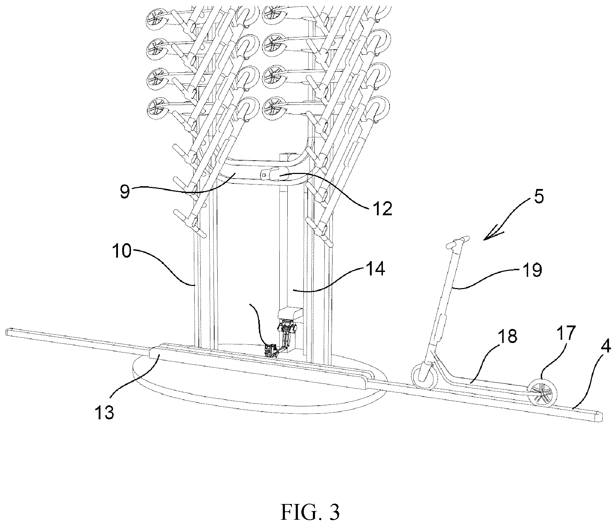

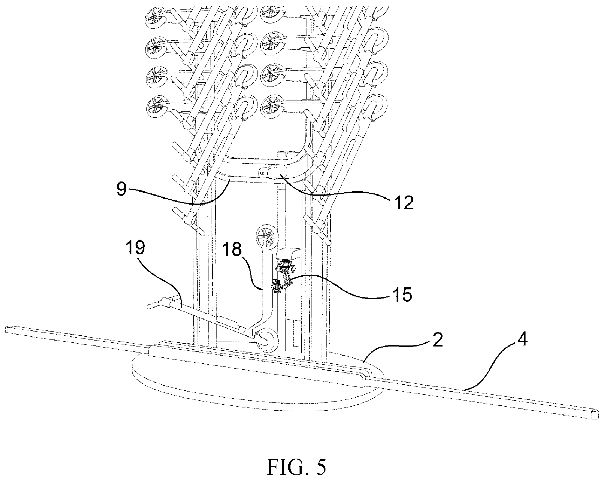

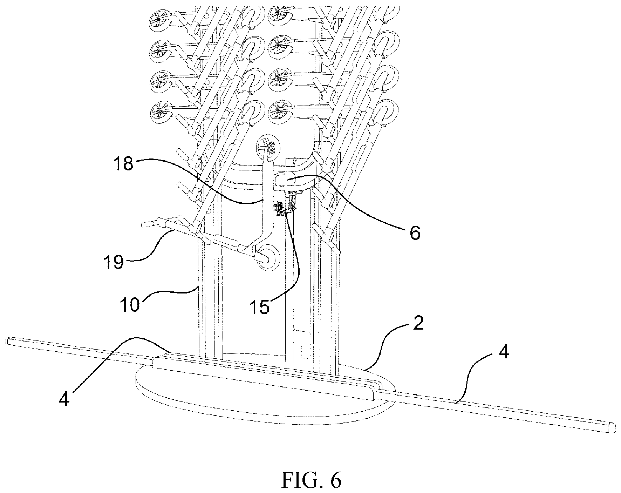

The operation of the apparatus shown in FIGURES 1 and 2 is described by referring to FIGURES 3 - 6 depicting operational positions of the apparatus.

In FIGURE 3, a 5 scooter has arrived to a storing and/or docking facility provided by the apparatus. The user of the scooter 5 pushes the scooter on the rail 4 and towards the door 6 (FIGURE 1). The wheels of the scooter 5 are set on the rail 4. When the scooter 5 approaches the door 6, detection elements detect the vicinity of the scooter to be stored and the door 6 is opened. The scooter may now be pushed forwards to the transfer conveyor 13 wherein the front wheel of the scooter is gripped. The user may now release the scooter and it is automatically transferred further by the transfer conveyor 13. Alternatively, the scooter may be gripped outside the shell 8 of the apparatus. However, if the scooter is moved automatically outside the shell 8 of the apparatus, walls or rails are needed to enclose the area of movement to avoid any possibility of the public or users to enter an area where there are moving parts. If only a stationary rail extends from the shell, the scooter is the only moving object. It is recommended that the system is provided with detectors indicating any increase in the force needed to transfer the scooter and trigger an immediate stop of the function.

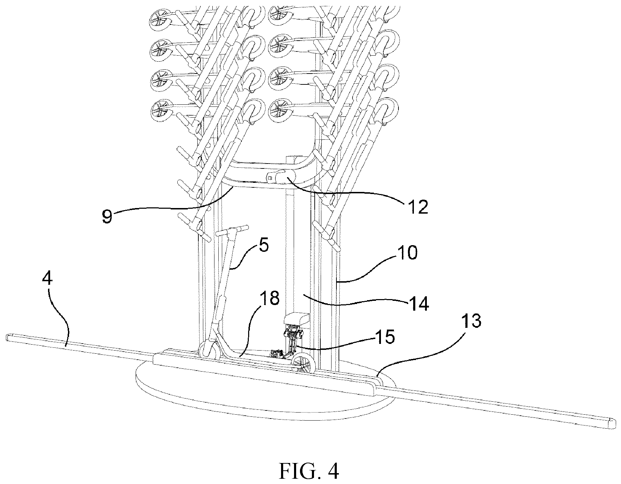

In FIGURE 4 the scooter has been transferred to a next position inside the shell of the apparatus. Now the scooter is gripped by the tilting gripper 15 of the tilting lift 14. The tilting gripper 15 grips the scooter 5 at the standing platform 18. The standing platform is usually flat and has an even thickness whereby gripping the scooter at that point is feasible to accomplish. Next the tilting gripper is moved upwards towards the endless conveyor 9. Simultaneously the scooter is tilted by the tilting gripper 15 so that the back wheel of the scooter is lifted up and the steering column 19 is set downwards. In this position the standing platform of the scooter is in vertical position. The tilting gripper 15 forwards the scooter upwards to the endless conveyor 9. When the scooter reaches the bottom or the lowest part of the endless conveyor 9, it is gripped by a carrier 12 of the endless conveyor. When the endless conveyor is forwarded, the scooter is tilted further 90° so that the steering column points downwards and the standing platform is in horizontal position. Simultaneously the scooter is tilted sideways in a position wherein the steering column of the scooter is tilted from the upright position in relation to the ground level. This can be accomplished either by tilting the scooters by the carriers or by setting the endless conveyor to a slightly tilted angle. In this position the scooters can be stacked tightly. The idea is that the scooters are tilted from the vertical position. The angle in relation to the ground level may vary between 0° to 180°, excluding the end points as at them no advantage in stacking is achieve. Angles between 0° to 90°, excluding the 0°, are recommended as movements of the scooter are easier to realize and stresses to carriers may be smaller.

The grippers and carriers of the apparatus may have various designs. Suitable equipment for realizing the above described movements and actions can be contemplated by a person skilled in the art.

The scooters are forwarded along the endless conveyor and delivery of a scooter is performed in opposite sequence. As the conveyor is endless and can be freely forwarded, or if so desired, reversed, any scooter on the conveyor can be transferred for delivery as requested by users. This enables that only fully charged and checked scooters are delivered, if such service is provided. Also, this enables that scooters of different service providers or even private owners are stored or docked in the same system. The scooters can be automatically identified to avoid any handling mistakes by clients.

The apparatus is preferably realized as an upright tower. This usually minimizes the need of space and costs. However.it can be contemplated that the apparatus is set in and angle in relation to the ground or below the ground level.

Identification cards, badges or preferably a cell phone app can be used for storing and retrieval of scooters. All functions relating the user or customer can be automated and the use made very easy and convenient. The scooters are safe and can't be tampered during storage.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The invention can be used for providing docking or storing space for scooters.

### REFERENCE SIGNS LIST

- 1: closed tower
- 2: base
- 3: upper surface
- 4: rail
- 5: scooter
- 6: door
- 7: display
- 8: shell
- 9: endless conveyor
- 10: frame
- 11: U-shaped rail
- 12: carrier
- 13: transfer conveyor
- 14: tilting lift
- 15: tilting gripper
- 16: lifting rail
- 17: wheel
- 18: standing platform
- 19: steering column

### CITATION LIST

### Patent Literature

WO 2017217929, US 8437873, CN 108 979 224, JP 2015 132153, CN 108 708 587 and JP H01 73251

## Claims

1. An apparatus for storing scooters, comprising
- a base (2) forming a ground level,
- a storage conveyor (9) having a transport direction and a set of carriers (12) for holding the scooters (5), the carriers (12) being configured to hold the scooters (5) in a position wherein the steering column (19) of the scooter (5) is tilted from the upright position in relation to the ground level,
**characterized** of
- a reception point for receiving the scooter (5) in an upright position wherein the steering column (19) of the scooter (5) extends upwards from the ground level,
- a tilting gripper (15) configured to grip and tilt the scooter (5) so that the scooter (59 is turned so that the rear wheel of the scooter 85) is lifted upwards, and
- a carrier (12) configured to grip the scooter (5) at the transfer conveyor (9) on a position wherein the rear wheel of the scooter (5) points upwards and the steering column (19) is below the level of the rear wheel.

2. An apparatus according to the claim 1, wherein the transport direction is in an angle in relation to the ground level, preferably at 90° angle.

3. An apparatus according to at least one of the claims 1-2, comprising
- a tilting gripper (15) configured for gripping a scooter (5) at a reception point on a ground level and tilting the scooter (5) so that the steering column (19) of the scooter (5) is tilted from the upright position in relation to the ground level and for moving the scooter (5) to the carrier (12) of a storage conveyor (9), and
- carriers (12) transferring the scooter (5) by the storage conveyor (9) from the reception point to a delivery point, holding the scooter (5) in a position wherein the steering column is tilted in relation to the ground level.

4. An apparatus according to at least one of the claims 1-3, wherein carrier (12) is configured to receive the scooter (5) on the carrier (12) of the transfer conveyor (9) on a position wherein the rear wheel points upwards and the steering column 8199 is below the level of the rear wheel and turning the scooter (5) to a position wherein the wheel line of the scooter (5) is transferred from vertical position towards horizontal position, preferably to a horizontal position.

5. An apparatus according to at least one of the claim 1-4, wherein the transfer conveyor (9) is vertical.

6. An apparatus according to at least one of the claims 1 - 5, wherein the transfer conveyor (9) is vertical and the track of the conveyor (9) is an endless loop.

7. An apparatus according to at least one of the claims 1-6, wherein the angle in relation to the ground level on which the scooter is tilted is between 0° to 180°, excluding the end points, and preferably between 0° to 90°, excluding the 0°.

8. A method for storing scooters, comprising
- gripping a scooter (5) with a tilting gripper (15) at a reception point on a ground level,
- tilting the scooter (5) with the tilting gripper (15) so that the steering column (19) of the scooter (5) is tilted from the upright position in relation to the ground level,
- moving the scooter (5) with the tilting gripper (15) to a carrier (12) of a storage conveyor(9) ,
- transferring the scooter (5) by the storage conveyor (9) from the reception point to a delivery point, and
- holding the scooter (5) in a position wherein the steering column (19) is tilted in relation to the ground level,
**characterized** of
- receiving the scooter (5) to a reception point in an upright position wherein the steering column (19) of the scooter (5) extends upwards from the ground level,
- gripping the scooter (5) by a tilting gripper (15) and the scooter (5) is turned so that the rear wheel of the scooter (5) is lifted upwards, and
- gripping the scooter (5) the carrier (12) of the transfer conveyor (9) on a position wherein the rear wheel of the scooter (5) points upwards and the steering column (19) is below the level of the rear wheel.

9. A method according to the claim, wherein the scooter (5) is received on the carrier (12) of the transfer conveyor (9) on a position wherein the rear wheel points upwards and the steering column (19) is below the level of the rear wheel and the scooter (59 is turned to a position wherein the wheel line of the scooter (59 is transferred from vertical position towards horizontal position, preferably to a horizontal position.

## Patentansprüche

1. Einrichtung zum Aufbewahren von Rollern, umfassend
- eine Basis (2), die eine Bodenhöhe bildet,
- einen Aufbewahrungsförderer (9), der eine Transportrichtung und einen Satz von Trägern (12) zum Halten der Roller (5) aufweist, wobei die Träger (12) konfiguriert sind, um die Roller (5) in einer Position zu halten, in der die Lenksäule (19) des Rollers (5) aus der aufrechten Position in Bezug zur Bodenhöhe gekippt ist,
**gekennzeichnet durch**
- einen Aufnahmepunkt zum Aufnehmen des Rollers (5) in einer aufrechten Position, wobei sich die Lenksäule (19) des Rollers (5) von der Bodenhöhe nach oben erstreckt,
- einen Kippgreifer (15), der konfiguriert ist, um den Roller (5) zu ergreifen und zu kippen, sodass der Roller (59) gewendet wird, sodass das Hinterrad des Rollers (85) nach oben angehoben wird, und
- einen Träger (12), der konfiguriert ist, um den Roller (5) an dem Transferförderer (9) an einer Position zu ergreifen, an der das Hinterrad des Rollers (5) nach oben zeigt und die Lenksäule (19) unterhalb der Höhe des Hinterrads liegt.

2. Einrichtung nach Anspruch 1, wobei die Transportrichtung in einem Winkel in Bezug zur Bodenhöhe, vorzugsweise in einem 90°-Winkel steht.

3. Einrichtung nach mindestens einem der Ansprüche 1-2, umfassend
- einen Kippgreifer (15), der konfiguriert ist, um einen Roller (5) an einem Aufnahmepunkt auf Bodenhöhe zu ergreifen und den Roller (5) zu kippen, sodass die Lenksäule (19) des Rollers (5) aus der aufrechten Position in Bezug zur Bodenhöhe gekippt wird, und den Roller (5) zu dem Träger (12) eines Aufbewahrungsförderers (9) zu bewegen, und
- Träger (12), die den Roller (5) durch den Aufbewahrungsförderer (9) von dem Aufnahmepunkt zu einem Ausgabepunkt transferieren, indem sie den Roller (5) in einer Position halten, in der die Lenksäule in Bezug zur Bodenhöhe gekippt ist.

4. Einrichtung nach mindestens einem der Ansprüche 1-3, wobei der Träger (12) konfiguriert ist, um den Roller (5) auf dem Träger (12) des Transferförderers (9) in einer Position aufzunehmen, in der das Hinterrad nach oben zeigt und die Lenksäule 8199 unterhalb der Höhe des Hinterrads liegt, und den Roller (5) in eine Position zu wenden, in der die Radlinie des Rollers (5) aus einer vertikalen Position in eine horizontale Position, vorzugsweise in eine horizontale Position, transferiert wird.

5. Einrichtung nach mindestens einem der Ansprüche 1-4, wobei der Transferförderer (9) vertikal ist.

6. Einrichtung nach mindestens einem der Ansprüche 1-5, wobei der Transferförderer (9) vertikal ist und der Verlauf des Förderers (9) eine Endlosschleife ist.

7. Einrichtung nach mindestens einem der Ansprüche 1-6, wobei der Winkel in Bezug zur Bodenhöhe, auf die der Roller gekippt wird, zwischen 0° und 180° beträgt, die Endpunkte ausgenommen, und vorzugsweise zwischen 0° und 90° beträgt, 0° ausgenommen.

8. Verfahren zum Aufbewahren von Rollern, umfassend
- Ergreifen eines Rollers (5) mit einem Kippgreifer (15) an einem Aufnahmepunkt auf einer Bodenhöhe,
- Kippen des Rollers (5) mit dem Kippgreifer (15), sodass die Lenksäule (19) des Rollers (5) aus der aufrechten Stellung in Bezug zur Bodenhöhe gekippt wird,
- Bewegen des Rollers (5) mit dem Kippgreifer (15) zu einem Träger (12) eines Aufbewahrungsförderers (9),
- Transferieren des Rollers (5) durch den Aufbewahrungsförderer (9) von dem Aufnahmepunkt zu einem Ausgabepunkt, und
- Halten des Rollers (5) in einer Position, in der die Lenksäule (19) in Bezug zur Bodenhöhe gekippt ist,
**gekennzeichnet durch**
- Aufnehmen des Rollers (5) an einem Aufnahmepunkt in einer aufrechten Position, in der sich die Lenksäule (19) des Rollers (5) von der Bodenhöhe nach oben erstreckt,
- Ergreifen des Rollers (5) durch einen Kippgreifer (15) und Wenden des Rollers (5), sodass das Hinterrad des Rollers (5) nach oben angehoben wird, und
- Ergreifen des Rollers (5) an dem Träger (12) des Transferförderers (9) in einer Position, in der das Hinterrad des Rollers (5) nach oben zeigt und sich die Lenksäule (19) unterhalb der Höhe des Hinterrades befindet.

9. Verfahren nach dem Anspruch, wobei der Roller (5) auf dem Träger (12) des Transferförderers (9) in einer Position aufgenommen wird, in der das Hinterrad nach oben zeigt und die Lenksäule (19) unterhalb der Höhe des Hinterrads liegt, und der Roller (59) in eine Position gewendet wird, in der die Radlinie des Rollers (59) von einer vertikalen Position in eine horizontale Position, vorzugsweise in eine horizontale Position, transferiert wird.

## Revendications

1. Appareil pour stocker des trottinettes, comprenant
- une base (2) formant un niveau du sol,
- un convoyeur de stockage (9) présentant une direction de transport et un ensemble de supports (12) pour maintenir les trottinettes (5), les supports (12) étant configurés pour maintenir les trottinettes (5) dans une position dans laquelle la colonne de direction (19) de la trottinette (5) est inclinée depuis la position verticale par rapport au niveau du sol,
**caractérisé par**
- un point de réception pour recevoir la trottinette (5) dans une position verticale dans laquelle la colonne de direction (19) de la trottinette (5) s'étend vers le haut à partir du niveau du sol,
- un dispositif de préhension inclinable (15) configuré pour saisir et incliner la trottinette (5) de telle sorte que la trottinette (59 soit tournée de telle sorte que la roue arrière de la trottinette 85) soit soulevée vers le haut, et
- un support (12) configuré pour saisir la trottinette (5) au niveau du convoyeur de transfert (9) dans une position dans laquelle la roue arrière de la trottinette (5) pointe vers le haut et la colonne de direction (19) est en dessous du niveau de la roue arrière.

2. Appareil selon la revendication 1, dans lequel la direction de transport forme un angle par rapport au niveau du sol, de préférence un angle de 90°.

3. Appareil selon au moins l'une des revendications 1-2, comprenant
- un dispositif de préhension inclinable (15) configuré pour saisir un trottinette (5) au niveau d'un point de réception au niveau du sol et incliner la trottinette (5) de telle sorte que la colonne de direction (19) de la trottinette (5) soit inclinée depuis la position verticale par rapport au niveau du sol et pour déplacer la trottinette (5) vers le support (12) d'un convoyeur de stockage (9), et
- des supports (12) transférant la trottinette (5) au moyen du convoyeur de stockage (9) du point de réception à un point de livraison, en maintenant la trottinette (5) dans une position dans laquelle la colonne de direction est inclinée par rapport au niveau du sol.

4. Appareil selon au moins l'une des revendications 1-3, dans lequel le support (12) est configuré pour recevoir la trottinette (5) sur le support (12) du convoyeur de transfert (9) dans une position dans laquelle la roue arrière pointe vers le haut et la colonne de direction (19) est en dessous du niveau de la roue arrière et fait tourner la trottinette (5) vers une position dans laquelle la ligne de roue de la trottinette (5) est transférée d'une position verticale vers une position horizontale, de préférence à une position horizontale.

5. Appareil selon au moins l'une des revendications 1-4, dans lequel le convoyeur de transfert (9) est vertical.

6. Appareil selon au moins l'une des revendications 1-5, dans lequel le convoyeur de transfert (9) est vertical et la piste du convoyeur (9) est une boucle sans fin.

7. Appareil selon au moins l'une des revendications 1-6, dans lequel l'angle par rapport au niveau du sol sur lequel la trottinette est incliné est entre 0° et 180°, à l'exclusion des points d'extrémité et, de préférence, entre 0° et 90°, à l'exclusion du 0°.

8. Procédé de stockage de trottinettes, comprenant
- la saisie d'une trottinette (5) à l'aide d'un dispositif de préhension inclinable (15) au niveau d'un point de réception au niveau du sol,
- l'inclinaison de la trottinette (5) à l'aide du dispositif de préhension inclinable (15) de telle sorte que la colonne de direction (19) de la trottinette (5) soit inclinée depuis la position verticale par rapport au niveau du sol,
- le déplacement de la trottinette (5) à l'aide du dispositif de préhension inclinable (15) vers un support (12) d'un convoyeur de stockage (9),
- transférer la trottinette (5) au moyen du convoyeur de stockage (9) du point de réception à un point de livraison, et
- le maintien de la trottinette (5) dans une position dans laquelle la colonne de direction (19) est inclinée par rapport au niveau du sol,
**caractérisé par** les étapes consistant à
- recevoir la trottinette (5) à un point de réception dans une position verticale dans laquelle la colonne de direction (19) de la trottinette (5) s'étend vers le haut à partir du niveau du sol,
- saisir la trottinette (5) au moyen d'un dispositif de préhension inclinable(15) et la trottinette (5) est tournée de telle sorte que la roue arrière de la trottinette (5) soit soulevée vers le haut, et
- saisir le support (12) de la trottinette (5) du convoyeur de transfert (9) dans une position dans laquelle la roue arrière de la trottinette (5) pointe vers le haut et la colonne de direction (19) est en dessous du niveau de la roue arrière.

9. Procédé selon la revendication, dans lequel la trottinette (5) est reçue sur le support (12) du convoyeur de transfert (9) dans une position dans laquelle la roue arrière pointe vers le haut et la colonne de direction (19) est en dessous du niveau de la roue arrière et la trottinette (59) est tournée vers une position dans laquelle la ligne de roues de la trottinette (59) est transférée d'une position verticale vers une position horizontale, de préférence à une position horizontale.
